# Europäisches Patentamt

# European Patent Office

# Office européen des brevets

(19)

(11) Veröffentlichungsnummer: **0 033 889**
**A2**

## EUROPÄISCHE PATENTANMELDUNG

(12)

(21) Anmeldenummer: **81100560.2**

(22) Anmeldetag: **27.01.81**

(51) Int. Cl.³: **B 23 K 11/32**

(30) Priorität: **05.02.80 DE 3004118**

(43) Veröffentlichungstag der Anmeldung: **19.08.81**
**Patentblatt 81/33**

(84) Benannte Vertragsstaaten: **AT BE CH FR GB IT LI NL**

(71) Anmelder: **Dyckerhoff & Widmann Aktiengesellschaft, Erdinger Landstrasse 1, D-8000 München 81 (DE)**

(72) Erfinder: **Reicheneder, Alfred, Schanzenbachstrasse 12, D-8000 München 70 (DE)**
Erfinder: **Werner, Alois, Hirschbergstrasse 6, D-8011 Poing (DE)**

(74) Vertreter: **Gollwitzer, W, Dipl.-Ing. et al, Postfach 2080 Langstrasse 5, D-6740 Landau/Pfalz (DE)**

(54) **Vorrichtung an einer Maschine zum kontinuierlichen Herstellen von Bewehrungskörben für Rohre oder dergleichen aus Stahlbeton.**

(57)   An einer Maschine zum kontinuierlichen Herstellen von aus Längsdrähten (7) und einem diese umgebenden und damit verschweißten Wendeldraht (8) bestehenden Bewehrungskörben für Rohre, Maste, Pfähle oder dergleichen aus Stahlbeton betrifft die Erfindung die Übertragung des im Sekundärstromkreis eines Schweißtransformators fließenden Schweißstromes zwischen einer von einem Schweißarm getragenen und am Wendeldraht (8) anliegenden Schweißrolle (12), die beim Schweißvorgang mit am Maschinenrahmen fest angebrachten, aber radial verstellbaren Schweißkonsolen (6) zusammenwirkt. Zur Vermeidung vor allem der bei der Übertragung des Schweißstromes mit schleifenden Kontakten auftretenden Stromverluste ist ein an einem Übertragungskopf (15) nach Art einer Taumelscheibe federnd gelagertes Kontaktstück (18) vorgesehen, das bei der Relativbewegung zwischen den mit dem einen Pol des Sekundärstromkreises verbundenen Teilen einerseits und der über die zu verschweißenden Drähte (7, 8) und die Schweißkonsolen (6) mit dem anderen Pol des Sekundärstromkreises verbundenen Schweißrolle (12) andererseits mit einer Kontaktplatte (25) in flächige Berührung gelangt.

**PATENTANWÄLTE**

**DIPL.-ING. W. GOLLWITZER · DIPL.-ING. F. W. MÖLL**

**6740 LANDAU/PFALZ · LANGSTRASSE 5**

POSTFACH 2080 · TELEFON 06341/87000, 6035 · TELEX 0453333
POSTSCHECK LUDWIGSHAFEN 27562-676 · DEUTSCHE BANK LANDAU 0215400 (BLZ 548700 93)

0033889

· Fr

· Dyckerhoff & Widmann Aktiengesellschaft
8000 München 81 (Bundesrepublik Deutschland)

Vorrichtung an einer Maschine zum kontinuierlichen Herstellen von Bewehrungskörben für Rohre oder dergleichen aus Stahlbeton.

Die Erfindung bezieht sich auf eine Vorrichtung an einer Maschine zum kontinuierlichen Herstellen von aus Längsdrähten und einem diese umgebenden und damit verschweißten Wendeldraht bestehenden Bewehrungskörben für Rohre, Maste, Pfähle oder dergleichen aus Stahlbeton, zur Übertragung des im Sekundärstromkreis eines Schweißtransformators fließenden Schweißstromes zwischen einer von einem Schweißarm getragenen und am Wendeldraht anliegenden Schweißrolle, die beim Schweißvorgang mit am Maschinenrahmen fest angebrachten, aber radial verstellbaren Schweißkonsolen zusammenwirkt.

Zur Vermeidung vor allem der bei der Übertragung des Schweißstromes mit schleifenden Kontakten auftretenden Stromverluste ist es bekannt, bei einer Maschine dieser Art in axialer Richtung neben jeder Schweißkonsole, die mit dem einen Pol des vom Schweißtransformator ausgehenden Sekundärstromkreises verbunden ist, eine Kontaktplatte anzuordnen, die mit dem anderen Pol des Sekundärstromkreises verbunden ist, und an dem Schweißarm neben der mit den Schweißkonsolen zusammenwirkenden Schweißrolle eine mit dieser leitend verbundene Kontaktrolle vorzusehen, die mit den Kontaktplatten zusammenwirkt (DE-PS 25 10 501).

Bei der Stromübertragungsvorrichtung dieser Maschine wird der Stromschluß dadurch bewirkt, daß die Kontaktrolle sich auf den jeweiligen Kontaktplatten abwälzt. Infolge der bei der Schweißung notwendigen hohen Stromstärke, die bei dieser Vorrichtung längs einer Linie übertragen wird, entsteht an der Kontaktrolle und an den Kontaktplatten eine starke Abnutzung durch Abbrand und damit wieder ein hoher Stromverlust.

Der Erfindung liegt die Aufgabe zugrunde, eine Möglichkeit zu schaffen, um bei derartigen Maschinen die Stromübertragung zu den jeweiligen Schweißstellen zu verbessern und dabei die Nachteile der bekannten Vorrichtung zu vermeiden.

Nach der Erfindung wird diese Aufgabe dadurch gelöst, daß ein Kontaktstück vorgesehen ist, das bei der Relativbewegung zwischen den mit dem einen Pol des Sekundärstromkreises verbundenen Teilen einerseits und der über die zu verschweißenden Drähte und die Schweißkonsolen mit dem anderen Pol des Sekundärstromkreises verbundenen Schweißrolle andererseits mit einer Kontaktplatte in flächige Berührung gelangt.

Das Kontaktstück ist zweckmäßig an einem Übertragungskopf

nach Art einer Taumelscheibe federnd gelagert. Es kann in einem Gehäuse mit einer stirnseitigen Öffnung angeordnet sein, aus der es mit seinem äußeren Teil herausragt, während sein innerer Teil einen Anschlag am Rand der Öffnung findet, gegen den es durch eine gegen die Bodenplatte des Gehäuses wirkende Druckfeder gepreßt wird.

Das Kontaktstück, das zweckmäßig kreisförmigen Querschnitt aufweist, ist vorteilhaft am Außenumfang seines äußeren Teils abgeschrägt.

Bei einer Schweißmaschine, bei welcher der Schweißkopf um den Bewehrungskopf rotiert, ist zweckmäßig jeder Schweißkonsole ein am Maschinenrahmen befestigter Übertragungskopf zugeordnet und sind die Übertragungsköpfe so angeordnet, daß die am Ringdraht abrollende Schweißrolle sich bei ihrer Drehbewegung mit ihrer Stirnfläche an den Stirnflächen der den Übertragungsköpfen zugeordneten Kontaktstücke abwälzt.

An der Stirnfläche der Schweißrolle kann eine Kontaktplatte auswechselbar befestigt sein, die vorteilhaft an ihrem Außenrand abgeschrägt ist.

Bei einer Schweißmaschine, bei welcher der Schweißkopf fest und der Bewehrungskopf drehbar angeordnet sind, sind zweckmäßig der am Ringdraht abrollenden Schweißrolle ein Übertragungskopf und jeder Schweißkonsole eine Kontaktplatte zugeordnet, wobei die Kontaktplatten am rotierenden Maschinenteil so befestigt sind, daß sie bei dessen Rotationsbewegung an der Stirnfläche des Kontaktstücks des Übertragungskopfes entlanggleiten.

Der Vorteil der Erfindung resultiert vor allem daraus, daß der sekundärseitige Stromkreis durch ein Kontaktstück geschlossen wird, das mit einer Kontaktplatte in flächige Berührung gelangt. Je nach Bauart der Maschine wälzt sich die am Wendeldraht abrollende Schweißrolle mit ihrer Stirnfläche bzw. einer an der Stirnfläche angeordneten Kontaktplatte in drehender Bewegung nach Art einer Planetenbahn an der Stirnfläche des ortsfesten Kontaktstücks ab bzw. gleitet das an der Schweißrolle angeordnete Kontaktstück drehend an festen Kontaktplatten entlang, so daß während der ganzen Zeit, während welcher der anderweitig gesteuerte Schweißstrom fließt, eine entsprechend große Fläche zur Stromübertragung zur Verfügung steht. Daß das Kontaktstück mit den Kontaktplatten auf jeden Fall in flächige Berührung gelangt, wird durch die nach Art einer Taumelscheibe und federnd gelagerte Ausbildung des Kontaktstücks sichergestellt.

Die Erfindung wird nachstehend anhand der in der Zeichnung dargestellten Ausführungsbeispiele näher erläutert. Es zeigt

Figur 1 in schematischer Ansicht eine Korbschweißmaschine, bei welcher der Schweißkopf um den herzustellenden Bewehrungskorb rotiert,

Figur 2 eine Seitenansicht einer Vorrichtung nach der Erfindung mit Übertragungskopf und Schweißrolle zur Verwendung bei der Schweißmaschine nach Figur 1,

Figur 3 einen Schnitt entlang der Linie III-III in Figur 2,

Figur 4 einen Querschnitt durch den Übertragungskopf,

Figur 5 in schematischer Ansicht eine andere Ausführungsform einer Korbschweißmaschine mit feststehendem Schweißkopf und rotierendem Bewehrungskorb,

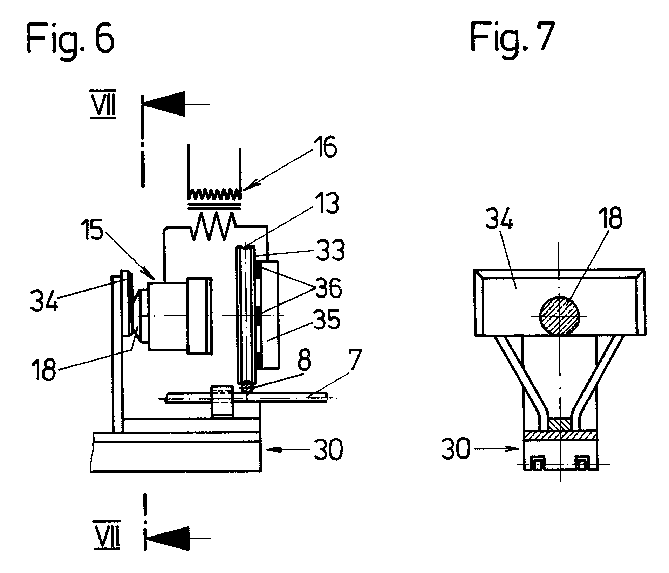

Figur 6 eine Seitenansicht einer Vorrichtung nach der Erfindung mit Übertragungskopf und Schweißrolle zur Verwendung bei der Schweißmaschine nach Figur 5 und

Figur 7 einen Schnitt entlang der Linie VII-VII in Figur 6.

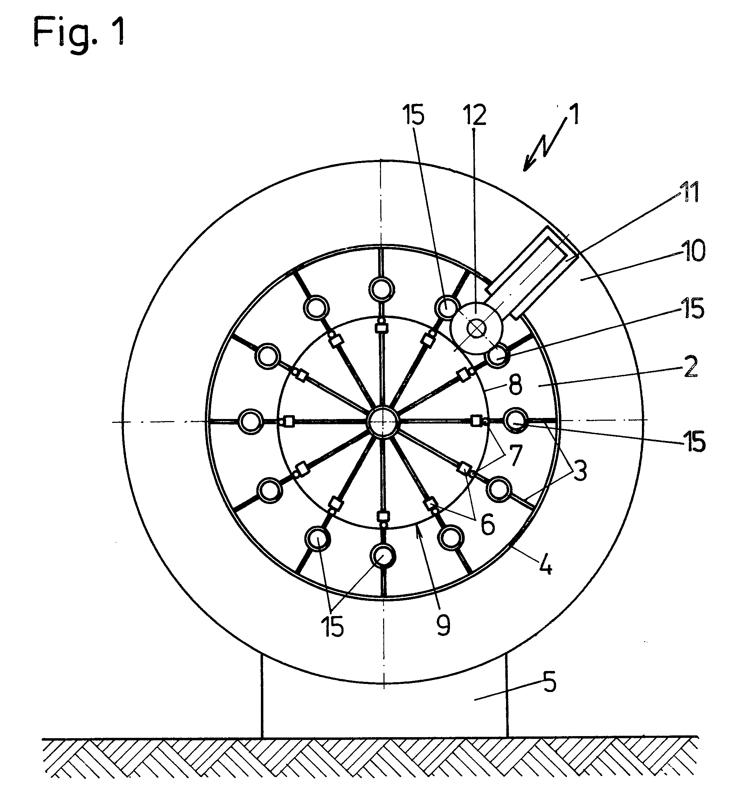

Die in Figur 1 in schematischer Stirnansicht dargestellte Korbschweißmaschine 1 umfaßt eine Speichenscheibe 2 mit einer Anzahl von Speichen 3, die außen von einer Felge 4 zusammengefaßt sind. Die Speichenscheibe 2 ist fest in einem Maschinenständer 5 gelagert. In den Speichen 3 sind radiale Schlitze vorgesehen, in denen Schweißkonsolen 6 radial verstellbar gelagert sind. Durch die Schlitze und Ausnehmungen in den Schweißkonsolen 6 werden die Längsdrähte 7 geführt, die mit einem sie wendelförmig umgebenden Ringdraht 8 den herzustellenden Bewehrungskorb 9 bilden.

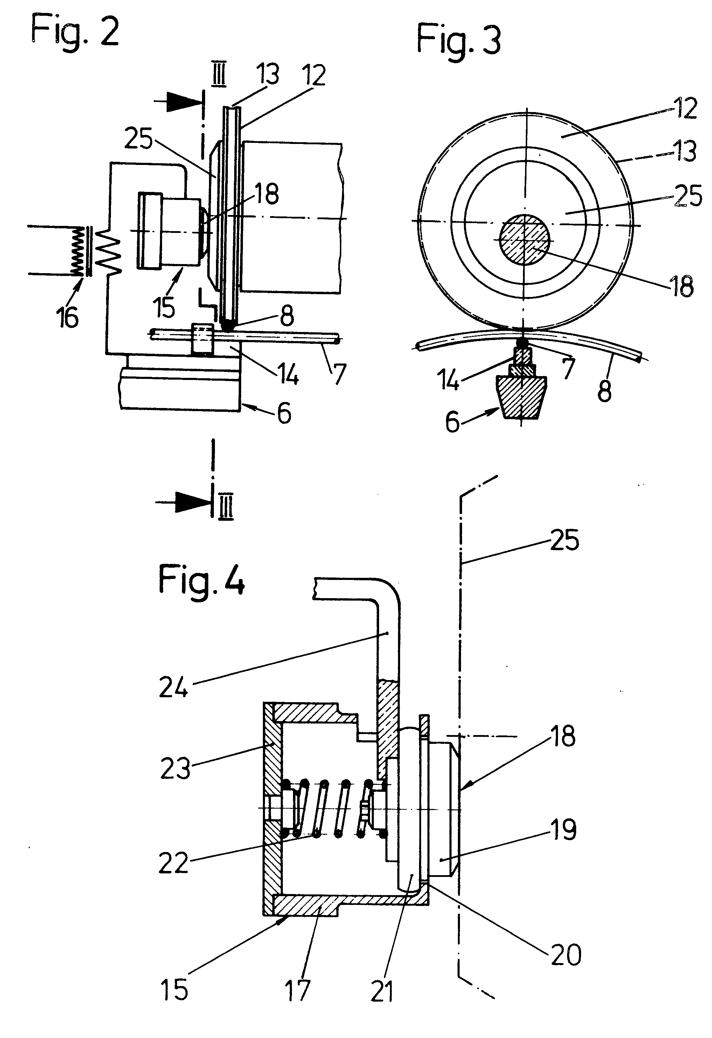

Um die Speichenscheibe 2 herum ist eine Ringscheibe 10 angeordnet, die einen Schweißarm 11 mit der in radialer Richtung verstellbaren Schweißrolle 12 trägt. Die Ringscheibe 10 ist mit dem Schweißarm 11 um die Speichenscheibe 2 herum drehbar. Die Schweißrolle 12 ist mit einer Umfangsnut 13 versehen, mit der sie am Ringdraht 8 abrollt und diesen unter Zwischenschaltung der Längsdrähte 7 gegen die Schweißunterlagen 14 an den Schweißkonsolen 6 drückt (Figur 2).

An den Speichen 3 sind, jeweils den Schweißkonsolen 6 zugeordnet, Übertragungsköpfe 15 angeordnet, die zur Stromübertragung mit der Schweißrolle 12 zusammenwirken. Dieses Zusammenwirken ist in den Figuren 2 bis 4 im einzelnen dargestellt.

Ein Sekundärpol des Schweißtransformators 16 ist über die Schweißkonsolen 6 mit den Schweißunterlagen 14, der zweite mit den Übertragungsköpfen 15 verbunden, von denen jeder Schweißkonsole 6 jeweils einer zugeordnet ist.

Jeder Übertragungskopf 15 besitzt in einem Gehäuse 17 ein Kontaktstück 18 mit kreisförmigem Querschnitt. Der äußere Teil 19 des Kontaktstücks 18 ragt durch eine stirnseitige Öffnung 20 im Gehäuse 17 nach außen; sein innerer Teil 21 wird durch eine Druckfeder 22, die sich gegen den Boden 23 des Gehäuses 17 abstützt, gegen den inneren Rand der Öffnung 20 gedrückt. Das Kontaktstück 18 ist in dem Gehäuse 17 gegen die Wirkung der Druckfeder 22 nach Art einer Taumelscheibe gelagert. Es ist über ein bewegliches Stromband 24 unmittelbar mit dem Sekundärpol des Schweißtransformators 16 verbunden.

Bei der Rotation der Ringscheibe 10 erreicht die am Ringdraht 8 abrollende und sich so ihrerseits drehende Schweißrolle 12 jeweils einen der Übertragungsköpfe 15 mit einem Kontaktstück 18, deckt dieses während ihres Weges vollständig ab (Figur 3) und bewegt sich weiter zum nächsten Übertragungskopf. Dabei wird über die Stirnfläche der Schweißrolle 12 die mit einer auswechselbar daran befestigten Kontaktplatte 25 versehen ist, und die Stirnfläche des Kontaktstücks 18 der elektrische Kontakt für den Schweißstrom hergestellt. Sowohl das Kontaktstück 18, wie auch die Kontaktplatte 25 haben abgeschrägte Ränder, die, zusammen mit der federnden Lagerung und der Taumelwirkung des Kontaktstücks 18 bewirken, daß dieses federnd zurückweichen und so auf den Rand der Kontaktplatte 25 aufklettern kann. Der Schweißstrom wird so über eine große Berührungsfläche auf die Schweißrolle 12 übertragen.

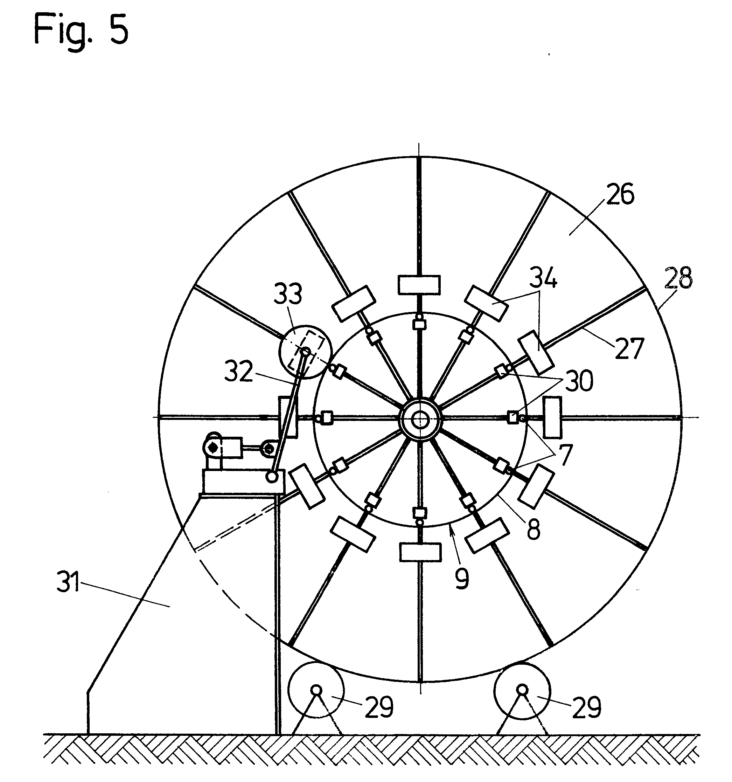

In analoger Weise kann auch dann verfahren werden, wenn der Schweißkopf fest angeordnet ist und die Speichenscheibe mit dem Bewehrungskorb rotiert. Eine solche Maschine ist in Figur 5 schematisch dargestellt. Sie umfaßt eine Speichenscheibe 26 mit Speichen 27, die außen von einer Felge 28 zusammengefaßt sind. Die Felge 28 liegt mit ihrem Außenumfang auf Antriebsrollen 29 auf, mittels deren sie gedreht werden kann.

In den Speichen 27 sind, zumindest im inneren Bereich der Speichenscheibe 26, wiederum radiale Schlitze vorgesehen, in denen Schweißkonsolen 30 radial verstellbar gelagert sind. Durch die Schlitze und Ausnehmungen in den Schweißkonsolen 30 werden die Längsdrähte 7 geführt, die zusammen mit einem sie wendelförmig umgebenden Ringdraht 8 den herzustellenden Bewehrungskorb 9 ergeben. Seitlich vor der Speichenscheibe 26 ist an einem Ständer 31 ein Schweißarm 32 mit einer Schweißrolle 33 in radialer Richtung zur Speichenscheibe verstellbar angeordnet. Die Schweißrolle 33 hat am Umfang eine Nut 13, mit der sie am Ringdraht 8 abrollt und diesen gegen die Längsdrähte 7 drückt.

Bei dieser Maschine sind an den Speichen 27, jeweils den Schweißkonsolen 30 zugeordnet, Kontaktplatten 34 vorgesehen, die sekundärseitig über die Schweißkonsolen 30, Längsdraht 7 und Ringdraht 8 sowie Schweißrolle 33 mit dem Schweißtransformator 16 verbunden sind, während der andere Sekundärpol des Schweißtransformators 16 mit einem Übertragungskopf 15 verbunden ist, der so ausgebildet ist, wie im Zusammenhang mit Figur 4 beschrieben wurde. In diesem Fall ist eine schleifende Stromübertragung 36 zwischen der Schweißrolle 33 und einem Kontaktstück 35 notwendig. Die Befestigung der Schweißrolle 33 an dem Schweißarm 32 ist, da sie nicht zur Erfindung gehört, ebensowenig dargestellt wie die Verbindung des Übertragungskopfes 15 mit dem Schweißarm 32.

Die Anwendung der Stromübertragung nach der Erfindung ist nicht auf die dargestellten Schweißmaschinentypen beschränkt, sondern auch bei anderen Systemen möglich.

0033889

- 9 -

Patentansprüche:

1. Vorrichtung an einer Maschine zum kontinuierlichen Herstellen von aus Längsdrähten und einem diese umgebenden und damit verschweißten Wendeldraht bestehenden Bewehrungskörben für Rohre, Maste, Pfähle oder dergleichen aus Stahlbeton, zur Übertragung des im Sekundärstromkreis eines Schweißtransformators fließenden Schweißstromes zwischen einer von einem Schweißarm getragenen und am Wendeldraht anliegenden Schweißrolle, die beim Schweißvorgang mit am Maschinenrahmen fest angebrachten, aber radial verstellbaren Schweißkonsolen zusammenwirkt, gekennzeichnet durch ein Kontaktstück (18), das bei der Relativbewegung zwischen den mit dem einen Pol des Sekundärstromkreises verbundenen Teilen einerseits und der über die zu verschweißenden Drähte (7, 8) und die Schweißkonsolen (6) mit dem anderen Pol des Sekundärstromkreises verbundenen Schweißrolle (12, 33) andererseits mit einer Kontaktplatte (25, 34) in flächige Berührung gelangt.

2. Vorrichtung nach Anspruch 1, dadurch gekennzeichnet, daß das Kontaktstück (18) an einem Übertragungskopf (15) nach Art einer Taumelscheibe federnd gelagert ist.

3. Vorrichtung nach Anspruch 1 oder 2, dadurch gekennzeichnet, daß das Kontaktstück (18) in einem Gehäuse (17) mit einer stirnseitigen Öffnung (20) angeordnet ist, aus der es mit seinem äußeren Teil (19) hinausragt, während sein innerer Teil (21) einen Anschlag am Rand der Öffnung (20) findet, gegen den es durch eine gegen die Bodenplatte (23) des Gehäuses (17) wirkende Druckfeder (22) gepreßt wird.

4. Vorrichtung nach einem der Ansprüche 1 bis 3, dadurch gekennzeichnet, daß das Kontaktstück (18) kreisförmigen Querschnitt aufweist.

5. Vorrichtung nach einem der Ansprüche 1 bis 4, dadurch gekennzeichnet, daß das Kontaktstück (18) am Außenumfang seines äußeren Teils abgeschrägt ist.

6. Vorrichtung nach einem der Ansprüche 1 bis 5 an einer Schweißmaschine, bei welcher der Schweißkopf um den Bewehrungskorb rotiert, dadurch gekennzeichnet, daß jeder Schweißkonsole (6) ein am Maschinenrahmen befestigter Übertragungskopf (15) zugeordnet ist und daß die Übertragungsköpfe (15) so angeordnet sind, daß die am Ringdraht (8) abrollende(n) Schweißrolle(n) (12) sich bei ihrer Drehbewegung mit ihrer Stirnfläche an den Stirnflächen der den Übertragungsköpfen (15) zugeordneten Kontaktstücke (18) abwälzt (Figur 1).

7. Vorrichtung nach Anspruch 6, dadurch gekennzeichnet, daß an der Stirnfläche der Schweißrolle (12) eine Kontaktplatte (25) angeordnet ist.

8. Vorrichtung nach Anspruch 7, dadurch gekennzeichnet, daß die Kontaktplatte (25) auswechselbar befestigt ist.

9. Vorrichtung nach Anspruch 7 oder 8, dadurch gekennzeichnet, daß die Kontaktplatte (25) am Außenrand abgeschrägt ist.

10. Vorrichtung nach einem der Ansprüche 1 bis 5 an einer Schweißmaschine, bei welcher der Schweißkopf fest und der Bewehrungskorb drehbar angeordnet sind, dadurch gekennzeichnet, daß der am Ringdraht (8) abrollende(n) Schweißrolle(n) (33) ein Übertragungskopf (15) und jeder Schweißkonsole (30) eine Kontaktplatte (34) zugeordnet sind, wobei die Kontaktplatte (34) am rotierenden Maschinenteil so befestigt sind, daß sie bei dessen Rotationsbewegung an der Stirnfläche des Kontaktstücks (18) des Übertragungskopfes (15) entlanggleiten (Figur 5).

# Fig. 1

Fig. 2

Fig. 3

Fig. 4

Fig. 5

Fig. 6

Fig. 7

0033889

4/4